# EUROPÄISCHE PATENTSCHRIFT

(11) **EP 4 477 925 B1**
(45) Veröffentlichungstag und Bekanntmachung des Hinweises auf die Patenterteilung: **09.12.2026**
(21) Anmeldenummer: 23178734.2
(22) Anmeldetag: 12.06.2023
(51) Int. Cl.: F16K 17/16, B65D 90/36

(54) **ECKIGE, INSBESONDERE RECHTECKIGE BERSTSCHEIBE**
ANGULAR, IN PARTICULAR RECTANGULAR RUPTURE DISC
DISQUE DE RUPTURE ANGULAIRE, EN PARTICULIER RECTANGULAIRE

(43) Veröffentlichungstag der Anmeldung: 18.12.2024
(60) Teilanmeldung: 25190982.6 / 4 663 988
(73) Patentinhaber: Rembe GmbH Safety + Control, 59929 Brilon (DE)
(72) Erfinder: Füller, Michael, 33104 Paderborn (DE); Penno, Stefan, 59929 Brilon (DE)
(74) Vertreter: Fritz Patent- und Rechtsanwälte PartmbB

(56) Entgegenhaltungen:
- FR-A1- 2 943 043
- FR-B1- 2 870 833

## Beschreibung

Die vorliegende Erfindung betrifft eine eckige, insbesondere rechteckige Berstscheibe, die aus einem Blech hergestellt ist, mit einem Randbereich, mit dem die Berstscheibe an einer Öffnung eines Behälters oder einer Leitung befestigt werden kann, und mit einem mittleren Bereich, mit dem die Öffnung bis zu einem Berstdruck absperrbar ist, und mit Sollbruchlinien, entlang derer die Berstscheibe bei einem Erreichen des Berstdrucks aufreißt, so dass der mittlere Bereich ganz oder in Teilen öffnet.

Die Anmelderin stellt solche eckigen Berstscheiben her und vertreibt sie unter der Bezeichnung "EGV". Die EGV wird zum Beispiel in Anlagen mit Silos, Sprühtrocknern, Elevatoren, Trogkettenförderern, Sieben mit leichter Vibration, Behälter mit mechanischer Befüllung oder Zyklone eingesetzt, insbesondere bei drucklosen Prozessen und Prozessen mit geringem Unter- oder Überdruck. Mit der Berstscheibe kann ein Druckanstieg in Behältern oder Leitungen über den Berstdruck verhindert werden. Bei einem Druckanstieg über den Berstdruck öffnet die EGV an den definierten Sollbruchlinien und entlässt so den Druck aus dem Behälter oder der Leitung in die Umgebung.

Die EGV ist in ihrer derzeitigen Ausführung mehrteilig. Sie umfasst ein zugeschnittenes und umgeformtes Blech, das zwei umlaufende Sicken aufweist und vier sogenannte Aufsteckbleche, von denen je eines an einer Seite des Bleches aufgesteckt ist. Das Blech umfasst den mittleren Bereich und einen Teil des Randbereiches der Berstscheibe. Andere Teile des Randbereiches werden durch die Aufsteckleisten gebildet. In dem Blech sind die Sollbruchlinien vorgesehen, die beim Erreichen des Berstdrucks aufreißen. Die Aufsteckbleche sind im Querschnitt u-förmige Leisten mit einem sehr schmalen Steg, der ungefähr so breit ist wie das Blech dick, und mit Schenkeln unterschiedlicher Länge, die den Rand des Blechs umgreifen.

Für die Herstellung der EGV sind mehrere Arbeitsschritte notwendig. Zum einen wird in mehreren Arbeitsschritten das Blech hergestellt. Zum anderen werden in mehreren Arbeitsschritten die Aufsteckleisten hergestellt. So dann werden die Aufsteckleisten auf die Bleche aufgesteckt. Schließlich werden diese Aufsteckleisten dann noch dagegen gesichert, dass sie sich bei einem Transport oder bei der Montage der Berstscheibe von dem Blech lösen und womöglich verloren gehen oder beschädigt werden. Dazu werden derzeit Klammern eingesetzt, die ebenfalls hergestellt, montiert und am Ende wieder demontiert werden müssen.

Aufgrund der Vielzahl von Arbeitsschritten ist die Herstellung der EGV sehr aufwändig.

Aus den Dokumenten FR 2 870 833 B1 und FR 2 943 043 A1 sind rechteckige Berstscheiben bekannt die im Randbereich einen Umschlag aufweisen, der einen ersten umgeschlagenen Teil des Blechs und einen zweiten Teil des Blechs aufweist, zu dem der umgeschlagene Teil parallel oder überwiegend parallel ist. Ein solcher Umschlag wird von Fachleuten auch als Falz bezeichnet. Der erste umgeschlagene Teil des Blechs und der zweite Teil des Blechs haben einen Abstand voneinander. Aufsteckleisten sind nicht vorgesehen. Dadurch entfallen Arbeitsschritte zum Herstellen und Aufstecken der Aufsteckleisten. Zwischen dem ersten umgeschlagenen Teil des Bleches und dem zweiten umgeschlagenen Teil des Bleches ist eine Dichtung angeordnet. Das Herstellen oder Beschaffen und Einsetzen der Dichtung sind dagegen Arbeitsschritte, die bei diesen bekannten Dichtungen hinzukommen. Auch die Herstellung dieser Berstscheiben ist aufgrund der Vielzahl von Arbeitsschritten sehr aufwändig.

Der Erfindung liegt daher die Aufgabe zugrunde, eine eckige Berstscheibe so zu gestalten, dass sie einfacher hergestellt werden kann.

Diese Aufgabe wird erfindungsgemäß dadurch gelöst, dass in dem zweiten Teil des Blechs ein erster Absatz vorgesehen ist, und dass der erste Teil und der zweite Teil vom Rand der Berstscheibe ausgehend bis zu dem ersten Absatz entweder mit einem Abstand zueinander vorgesehen sind oder aneinander liegen und dass der erste Teil und der zweite Teil ab dem ersten Absatz aneinander liegen.

Bei einer erfindungsgemäßen Berstscheibe entfallen somit die Aufsteckleisten und der Randbereich der Berstscheibe wird durch das Blech gebildet, dessen Rand dazu umgeschlagen ist. Die Umformung des Blechs zur erfindungsgemäßen Berstscheibe ist dadurch aufwändiger als die Herstellung des Bleches der EGV allein. Dadurch, dass die Herstellung der Aufsteckleisten und die Montage der Aufsteckleisten an dem Blech entfällt, ist die Herstellung der Berstscheibe insgesamt aber weniger aufwändig. Die Berstscheibe kann so insbesondere an einem Arbeitsplatz aus einem Blech umgeformt werden und es müssen keine Teile, wie zum Beispiel Aufsteckleisten an einem anderen Arbeitsplatz hergestellt und zugeführt werden oder aus einem Vorrat zugeführt werden. Auch ist bei einer erfindungsgemäßen Berstscheibe keine Transportsicherung zum Sichern von Aufsteckleisten notwendig. Ebensowenig muss eine Dichtung eingesetzt werden.

Bei einer erfindungsgemäßen Berstscheibe können in dem Umschlag Löcher vorgesehen sein, die für Schrauben zum Anschrauben der Berstscheibe an einem Rand der Öffnung geeignet sind.

Bei einer erfindungsgemäßen Berstscheibe ist in dem zweiten Teil ein erster Absatz vorgesehen. Vom R and der Berstscheibe ausgehend bis zu dem ersten Absatz ist zwischen dem ersten Teil und dem zweiten Teil ein Abstand vorgesehen oder der erste und der zweite Teil liegen aneinander, während dann ab dem ersten Absatz der erste Teil und der zweite Teil aneinander liegen.

Eine erfindungsgemäße Berstscheibe kann in dem mittleren Bereich mit einem Abstand zu dem Umschlag einen zweiten Absatz aufweisen. Der zweite Absatz kann in gleiche Richtung gehen wie der erste Absatz. Es ist aber auch möglich, dass der zweite Absatz in die entgegengesetzte Richtung geht wie der erste Absatz. Anders als die Sicken, die in dem Blech der bekannten EGV vorgesehen sind, wird zum Herstellen der Absätze weniger Umformungsenergie aufgewendet. Das hat den Vorteil, dass sich das Blech beim Herstellen dieser Absätze im Gegensatz zu einem Blech der EGV, in dass die Sicken eingebracht werden, weniger ungewünscht verformt. In Folge der Umformung zum Einbringen der Sicken kann es nämlich dazu kommen, dass die Berstscheiben in einem nicht montierten Zustand nicht mehr plan sind, sondern sich ein so genannter Frosch ausbildet, was bedeutet, dass sich Ecken der Berstscheibe bzw. des Bleches aus der Ebene, die durch das Blech gebildet werden sollte, herausheben. Das hat zwar keinerlei Bedeutung für die Funktion der Berstscheibe, erschwert aber zumindest geringfügig die Montage der bekannten Berstscheibe.

Ein Ausführungsbeispiel der Erfindung wird unter Bezugnahme auf die Zeichnungen nachfolgend beschrieben. Es zeigen:
- Fig. 1: eine perspektivische Ansicht einer erfindungsgemäßen Berstscheibe,
- Fig. 1a: eine Draufsicht auf die Außenseite der Berstscheibe,
- Fig. 2: eine Ansicht eines Schnittes durch die Berstscheibe aus der gleichen Perspektive wie in Fig. 1,
- Fig. 3: einen Ausschnitt aus der Fig. 2 in vergrößerter Darstellung,
- Fig. 4: einen Ausschnitt aus einer Ansicht des gleichen Schnitts in einer Draufsicht,
- Fig. 4a: einen Ausschnitt aus einer Ansicht eines entsprechenden Schnitts in einer Draufsicht einer zweiten erfindungsgemäßen Berstscheibe und
- Fig. 4b: einen Ausschnitt aus einer Ansicht eines entsprechenden Schnitts in einer Draufsicht einer dritten erfindungsgemäßen Berstscheibe.

Es ist nicht notwendig, dass eine erfindungsgemäße Vorrichtung alle nachfolgend beschriebenen Merkmale aufweist. Es ist auch möglich, dass eine erfindungsgemäße Vorrichtung nur einzelne Merkmale des nachfolgend beschriebenen Ausführungsbeispiels aufweist.

Die Berstscheibe 1 ist aus einem Blech hergestellt, das dazu in besonderer Weise zugeschnitten ist. Dabei ist das Blech an den Ecken ausgeklinkt worden. Das Blech ist mittels eines Absetzwerkzeugs mit einem ersten Absatz 15 und einem zweiten Absatz 16 versehen. Der erste Absatz 15 ist weiter außen in das Blech eingebracht worden und der zweite Absatz 16 weiter innen. Außerdem sind Paare von Löchern 13 in das Blech eingebracht worden, wobei die Löcher 13 gleich groß sind. Die zwei Löcher 13 eines Paares liegen mit gleichem Abstand auf einer Linie senkrecht zu einer Geraden, entlang der das Blech zum Herstellen eines Umschlags um 180° abgekantet ist, um so einen Randbereich 11 des Bleches herzustellen. Nach dem Umschlagen liegen die Löcher 13 eines Paares übereinander und fluchten. Zusätzliche Löcher 14 sind in dem Blech an den Ecken vorgesehen. Alle diese Löcher 13, 14 dienen der Befestigung der Berstscheibe 1, die mit Schrauben, die durch diese Löcher 13, 14 hindurchgeführt werden können, an einem Behälter oder einer Leitung angeschraubt werden kann.

Innerhalb des Randbereichs 11 ist ein mittlerer Bereich 12 der Berstscheibe 1 gebildet, in dem der zweite Absatz 16 vorgesehen ist. Der erste Absatz liegt in dem Randbereich 11.

Durch den Umschlag sind im Randbereich 11 zwei Teile 111, 112 des Bleches gebildet, nämlich ein erster, umgeschlagener Teil 111 und ein zweiter, zu dem umgeschlagenen Teil 111 paralleler Teil 112. Der erste Absatz 15 ist in dem zweiten Teil 112 ausgebildet. Dadurch gibt es einen Bereich, in dem der erste Teil 111 und der zweite Teil 112 einen Abstand voneinander haben, und einen weiter innen liegenden Bereich, in dem der erste Teil 111 und der zweite Teil 112 aneinander liegen. In diesem Bereich, in dem der erste Teil 111 und der zweite Teil 112 aneinander liegen, sind Sollbruchlinien (nicht dargestellt) vorgesehen, entlang derer die Berstscheibe 1 bei Erreichen eines Berstdrucks aufreißt und öffnet.

In der Praxis kann es sein, dass der erste Teil 111 und der zweite Teil 112 in Bereichen zwischen dem Umschlag und dem Absatz 15 aneinander liegen. Dazu können diese Bereiche gegeneinander gewölbt sein, insbesondere dort, wo die Löcher 13 vorgesehen sind, aber auch in einem an der Falz angrenzenden Bereich. Diese Wölbung kann schon bei der Herstellung der Berstscheibe hergestellt werden, zum Beispiel beim Falzen. Es ist aber auch möglich, dass die Wölbung erst bei der Montage der Berstscheibe entsteht, wenn durch die Löcher 13 geführte Schrauben angezogen und dadurch der ersten Teil 111 und der zweite Teil 112 gegeneinandergedrückt werden.

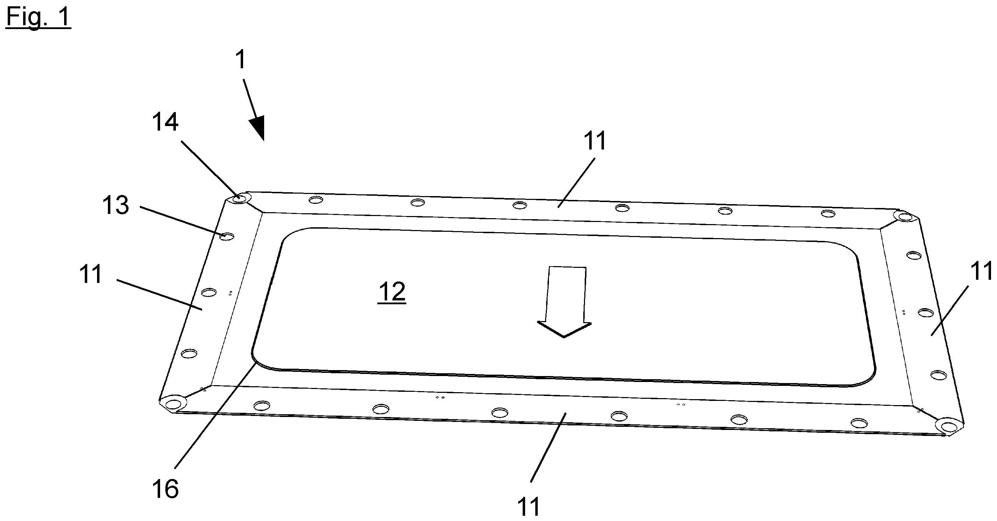

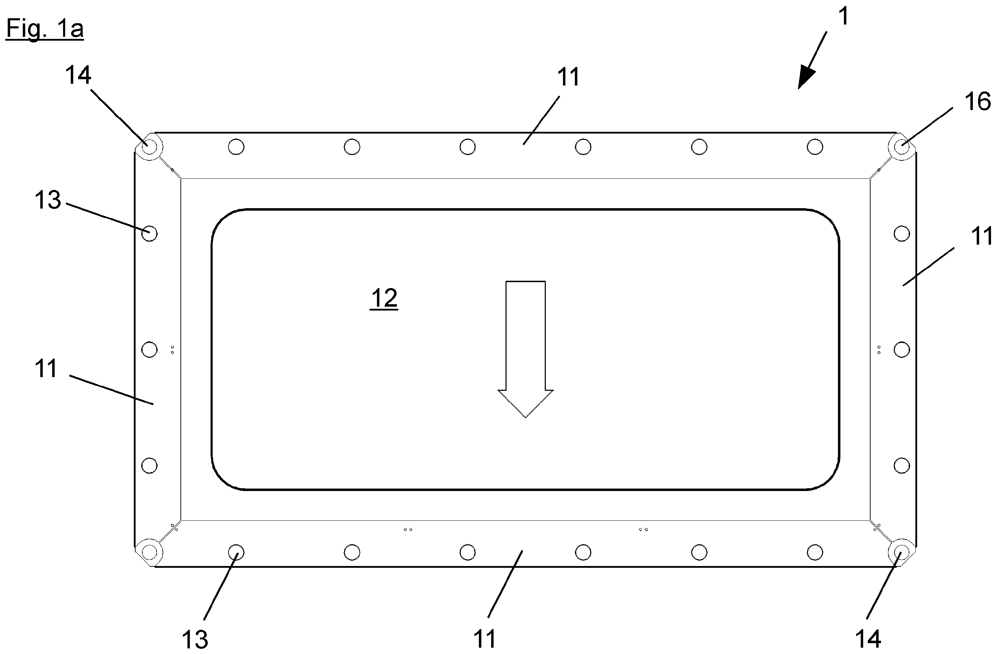

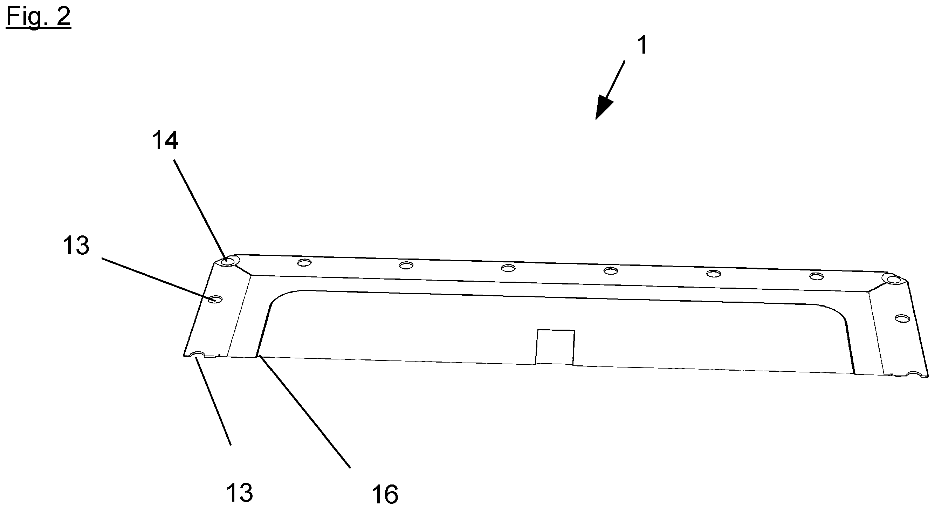

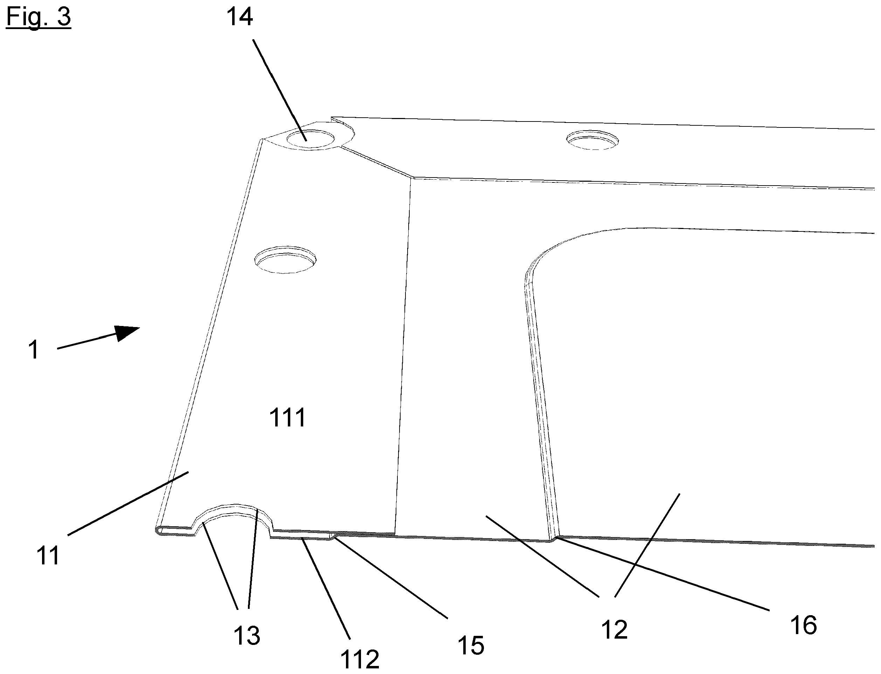

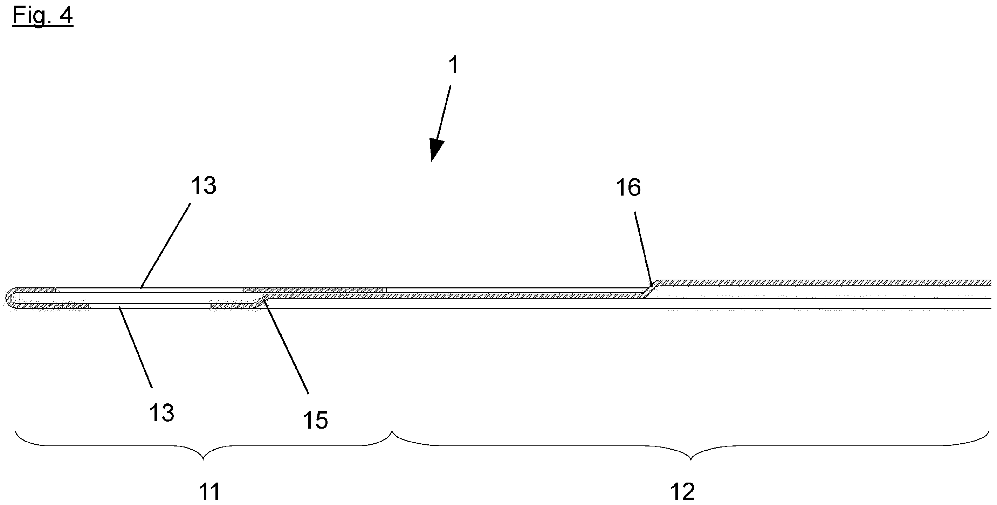

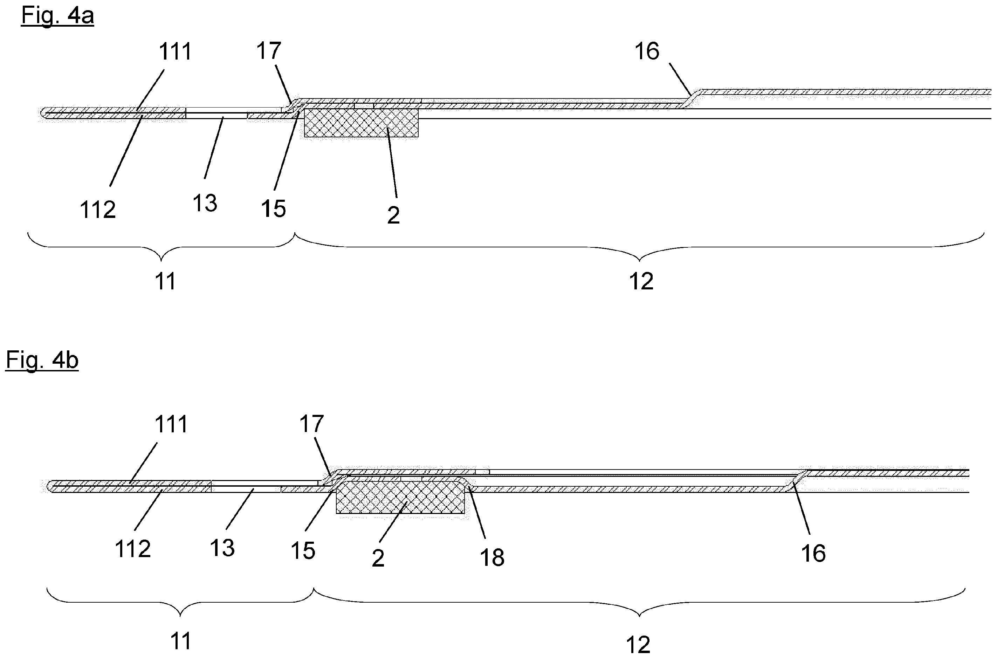

Sowohl bei der zweiten Berstscheibe nach der Fig. 4a als auch bei der Berstscheibe nach der Fig. 4b, die abgesehen von den dargestellten Unterschieden der Berstscheibe nach den Figuren 1 bis 4 entsprechen, liegen der erste Teil 111 und der zweite Teil 112 aneinander. Dazu ist bei der zweiten Berstscheibe nach Fig. 4a und auch bei der dritten Berstscheibe nach Fig. 4b im ersten Teil 111 des Randbereichs 11 ein dritter Absatz 17 mittels eines Absetzwerkzeugs gebildet, der sich an den ersten Absatz 15 anschmiegt. Der erste Absatz 15 und der dritte Absatz 17 können in einem Arbeitsgang hergestellt werden, wenn zuvor der Umschlag hergestellt ist.

Bei der dritten Berstscheibe ist im ersten Bereich zusätzlich zu dem ersten Absatz 15, dem zweiten Absatz 16 und dem dritten Absatz 17 im zweiten Teil 112 des Randbereichs 11 ein vierter Absatz 18 vorgesehen, der dem ersten Absatz 15 entgegengerichtet ist. Dadurch wird im zweiten Teil 112 des Randbereichs 11 eine umlaufende Vertiefung gebildet.

Bei den drei dargestellten Berstscheiben 1 kann an den ersten Absatz 15 angrenzend an dem zweiten Teil 112 des Randbereichs 11 eine Dichtung 2 angeordnet werden, die bei einer Montage der Berstscheibe 1 an dem Rand einer zu verschließenden Öffnung anliegt und einen Spalt zwischen der Berstscheibe 1 und dem Rand der Öffnung abdichtet. Durch den ersten Absatz 15 wird verhindert, dass diese Dichtung 2 bei der Montage so stark komprimiert wird, dass sie beschädigt wird und dann ihren Zweck zur Abdichtung womöglich nicht mehr erfüllt. Bei der Dichtung 2 kann es sich um einen Dichtungsstreifen handeln, der auf den zweiten Teil 112 aufgeklebt ist. Es kann sich alternativ auch um eine geschäumte Dichtung 2 handeln, die angespritzt ist. Bei der dritten Berstscheibe 1 ist durch die umlaufende Vertiefung der Ort beidseitig begrenzt, in dem die Dichtung 2 angeordnet sein kann.

## Patentansprüche

1. Eckige, insbesondere rechteckige Berstscheibe (1), die aus einem Blech hergestellt ist,
- mit einem Randbereich (11), mit dem die Berstscheibe (1) an einer Öffnung eines Behälters oder einer Leitung befestigt werden kann,
- mit einem mittleren Bereich (12), mit dem die Öffnung bis zu einem Berstdruck absperrbar ist,
- mit Sollbruchlinien, entlang derer die Berstscheibe (1) bei einem Erreichen des Berstdrucks aufreißt, so dass der mittlere Bereich (12) ganz oder in Teilen öffnet, und
- mit einem Umschlag im Randbereich (11) der Berstscheibe, der einen ersten, umgeschlagenen Teil (111) des Blechs und einen zweiten Teil (112) des Blechs aufweist, zu dem der umgeschlagene Teil (111) parallel oder überwiegend parallel ist,
**dadurch gekennzeichnet,**
**dass** in dem zweiten Teil (112) des Blechs ein erster Absatz (15) vorgesehen ist, und
**dass** der erste Teil (111) und der zweite Teil (112) vom Rand der Berstscheibe (1) ausgehend bis zu dem ersten Absatz (15)
- entweder mit einem Abstand zueinander vorgesehen sind
- oder aneinander liegen
und
**dass** der erste Teil (111) und der zweite Teil (112) ab dem ersten Absatz (15) aneinander liegen.

2. Berstscheibe nach Anspruch 1, **dadurch gekennzeichnet, dass** in dem Umschlag Löcher (13) vorgesehen sind, die für Schrauben zum Anschrauben der Berstscheibe (1) an einem Rand der Öffnung geeignet sind.

3. Berstscheibe nach Anspruch 1 oder 2, **dadurch gekennzeichnet, dass** die Berstscheibe (1) in dem mittleren Bereich (12) mit einem Abstand zu dem Umschlag einen zweiten Absatz (16) aufweist, wobei zwischen dem Rand der Berstscheibe und dem zweiten Absatz (16) der erste Absatz (15) vorgesehen ist.

4. Berstscheibe nach Anspruch 3, **dadurch gekennzeichnet, dass** der zweite Absatz (16) vom Rand der Berstscheibe in Richtung zum Zentrum der Berstscheibe betrachtet in die gleiche Richtung geht wie der erste Absatz (15).

5. Berstscheibe nach Anspruch 3, **dadurch gekennzeichnet, dass** der zweite Absatz (16) vom Rand der Berstscheibe in Richtung zum Zentrum der Berstscheibe betrachtet in die entgegengesetzte Richtung geht wie der erste Absatz (15).

## Claims

1. Angular, in particular rectangular rupture disc (1), which is produced from a metal sheet,
- with an edge region (11), with which the rupture disc (1) can be fastened to an opening of a container or a line,
- with a central region (12), with which the opening can be blocked up to a rupture pressure,
- with predetermined breaking lines, along which the rupture disc (1) ruptures when the rupture pressure is reached, so that the central region (12) opens completely or in parts, and
- with a turn-over in the edge region (11) of the rupture disc, which has a first, turned-over part (111) of the metal sheet and a second part (112) of the metal sheet, to which the turned-over part (111) is parallel or predominantly parallel,
**characterised in that**
a first shoulder (15) is provided in the second part (112) of the metal sheet, and
the first part (111) and the second part (112) starting from the edge of the rupture disc (1) up to the first shoulder (15)
- are either provided at a distance from one another
- or lie against one another
and
the first part (111) and the second part (112) lie against one another starting from the first shoulder (15).

2. Rupture disc according to claim 1, **characterised in that** holes (13) are provided in the turn-over, which are suitable for screws for screwing the rupture disc (1) onto an edge of the opening.

3. Rupture disc according to claim 1 or 2, **characterised in that** the rupture disc (1) has a second shoulder (16) in the central region (12) at a distance from the turn-over, wherein the first shoulder (15) is provided between the edge of the rupture disc and the second shoulder (16).

4. Rupture disc according to claim 3, **characterised in that** the second shoulder (16), viewed from the edge of the rupture disc in the direction of the centre of the rupture disc, extends in the same direction as the first shoulder (15).

5. Rupture disc according to claim 3, **characterised in that** the second shoulder (16), viewed from the edge of the rupture disc in the direction of the centre of the rupture disc, extends in the opposite direction to the first shoulder (15).

## Revendications

1. Disque de rupture (1) angulaire, en particulier rectangulaire, qui est fabriqué à partir d'une tôle,
- avec une zone de bord (11) avec laquelle le disque de rupture (1) peut être fixé à une ouverture d'un récipient ou d'une conduite,
- avec une zone centrale (12) avec laquelle l'ouverture peut être bloquée jusqu'à une pression de rupture,
- avec des lignes de rupture prédéterminées le long desquelles le disque de rupture (1) se rompt lorsque la pression de rupture est atteinte, de sorte que la zone centrale (12) s'ouvre entièrement ou en partie, et
- avec un retournement dans la zone de bord (11) du disque de rupture, qui présente une première partie retournée (111) de la tôle et une deuxième partie (112) de la tôle, à laquelle la partie retournée (111) est parallèle ou principalement parallèle,
**caractérisé en ce**
**qu'**un premier épaulement (15) est prévu dans la deuxième partie (112) de la tôle, et
**que** la première partie (111) et la deuxième partie (112) partant du bord du disque de rupture (1) jusqu'au premier épaulement (15)
- sont soit prévues à distance l'une de l'autre
- soit reposent l'une contre l'autre
et
**que** la première partie (111) et la deuxième partie (112) reposent l'une contre l'autre à partir du premier épaulement (15).

2. Disque de rupture selon la revendication 1, **caractérisé en ce que** des trous (13) sont prévus dans le retournement, qui sont appropriés pour des vis pour visser le disque de rupture (1) sur un bord de l'ouverture.

3. Disque de rupture selon la revendication 1 ou 2, **caractérisé en ce que** le disque de rupture (1) présente un deuxième épaulement (16) dans la zone centrale (12) à distance du retournement, le premier épaulement (15) étant prévu entre le bord du disque de rupture et le deuxième épaulement (16).

4. Disque de rupture selon la revendication 3, **caractérisé en ce que** le deuxième épaulement (16), vu du bord du disque de rupture en direction du centre du disque de rupture, va dans la même direction que le premier épaulement (15).

5. Disque de rupture selon la revendication 3, **caractérisé en ce que** le deuxième épaulement (16), vu du bord du disque de rupture en direction du centre du disque de rupture, va dans la direction opposée à celle du premier épaulement (15).
